# EUROPÄISCHE PATENTSCHRIFT

(11) **EP 1 431 102 B1**
(45) Veröffentlichungstag und Bekanntmachung des Hinweises auf die Patenterteilung: **28.02.2007**
(21) Anmeldenummer: 03028867.4
(22) Anmeldetag: 16.12.2003
(51) Int. Cl.: B60W 10/04

(54) **Vorrichtung und Verfahren zur Steuerung eines Traktors mit einem stufenlosen Getriebe**
Device and method for controlling an agricultural tractor with a continuously variable transmission
Dispositif et méthode de réglage d'un tracteur agricole avec une transmission à variation continue

(30) Priorität: 19.12.2002 DE 10259422
(43) Veröffentlichungstag der Anmeldung: 23.06.2004
(73) Patentinhaber: ZF FRIEDRICHSHAFEN AG, 88038 Friedrichshafen (DE)
(72) Erfinder: Kurt, Schachner, 3352 St. Peter in der Au (AT); Nakesch, Heimo, 4060 Leonding (AT); Haas, Werner, 4470 Enns (AT)

(56) Entgegenhaltungen:
- DE-A1- 4 430 447
- DE-A1- 10 064 324
- DE-C1- 19 744 218

## Beschreibung

Die vorliegende Erfindung betrifft ein Verfahren zum Betrieb eines Traktors mit einem Stufenlosgetriebe gemäß dem Oberbegriff des Patentanspruchs 1. Des weiteren bezieht sich die vorliegende Erfindung auf eine Steuerung zum Betrieb eines Traktors mit einem Stufenlosgetriebe, insbesondere zur Durchführung des erfindungsgemäßen Verfahrens.

Nach dem Stand der Technik sind für Fahrzeuge mit Stufenlosgetriebe Steuerungen und Verfahren für einen Betrieb mit konstanter Geschwindigkeit oder konstanter Getriebeübersetzung bekannt, obwohl ein Betrieb mit konstanter Motordrehzahl aufgrund seiner Eignung für den Power-Take-Off-Betrieb (PTO-Betrieb, Zapfenwellenbetrieb) von großer praktischer Bedeutung ist. Der Grund dafür liegt in den bekannten Steuerungskonzepten für die Motorsteuerungen und dem Verhalten bei Erreichen der Volllastkennlinie. Ein Verfahren zum Betrieb eines Fahrzeugs, insbesondere eines Traktors mit konstanter Geschwindigkeit wird beispielsweise im Rahmen der WO 00/66386 beschrieben.

Für den Fall eines Motorbetriebs mit Drehzahlsteuerung ist unter Voraussetzung eines stationären Betriebes im Teillastbetrieb das erzeugte Motormoment proportional zum Abfall der Motordrehzahl gegenüber der Solldrehzahl für den Leerlauf. Hierbei hängt die Größe des Drehzahlabfalls von der Steilheit der Teillastkurve (P-Grad) ab, welche über die Motorsteuerung einstellbar ist.

Prinzipiell tritt hierbei ein Drehzahlabfall auf, der zusätzlich durch den sogenannten Drückungsregler der Fahrzeugsteuerung beeinflusst wird, wobei der Drückungsregler den Drehzahlabfall beim Übergang Teillast-Volllast durch Regelung der Getriebeübersetzung begrenzt. Ein typischer Wert für die Steilheit der Teillastkurve könnte z. B. bei 8 % liegen, sodass sich bei einer Solldrehzahl für den Leerlauf von 2000 U/min bei Volllast eine Motordrehzahl von 1840 U/min einstellt. In der Praxis stellt sich jedoch aufgrund von Toleranzen in der Volllastkennlinie und dem P-Grad ein etwas höherer Drehzahlabfall ein.

Bei Motoren mit Drehmomentsteuerung (P-Grad = Null) tritt unter Voraussetzung eines stationären Betriebes im Teillastbetrieb kein Abfall der Motordrehzahl gegenüber der Solldrehzahl für Leerlauf auf. Bei instationären Betriebszuständen sowie unter Volllast können jedoch Drehzahlabfälle auftreten.

Das erwähnte Motorsteuerungskonzept bei Motoren mit Drehzahlsteuerung weist den Nachteil eines unvermeidbaren Drehzahlabfalls im Teil- und Volllastbetrieb auf; das gleiche gilt bei Motoren mit Drehmomentsteuerung im Volllastbereich.

Das Dokument DE 19744218 C1 offenbart ein Verfahren nach dem Oberbegriff des Anspruchs 1 bzw. eine Steuerung nach dem Oberbegriff des Anspruchs 3.

Der vorliegenden Erfindung liegt die Aufgabe zugrunde, ein Verfahren zum Betrieb eines Traktors mit einem Stufenlosgetriebe anzugeben, welches die Nachteile des Standes der Technik vermeidet. Insbesondere soll ein Betrieb mit konstanter Motordrehzahl bei Teil- und Volllastbetrieb realisiert werden. Zudem soll das erfindungsgemäße Verfahren sowohl für Motoren mit Drehzahlsteuerung als auch für Motoren mit Drehmomentsteuerung durchführbar sein. Des weiteren soll eine Steuerung zum Betrieb eines Traktors mit einem Stufenlosgetriebe, insbesondere zur Durchführung des erfindungsgemäßen Verfahrens angegeben werden.

Diese Aufgabe wird für ein Verfahren durch die Merkmale des Patentanspruchs 1 gelöst. Eine Steuerung, insbesondere zur Durchführung des erfindungsgemäßen Verfahrens ist Gegenstand des Patentanspruchs 4. Weitere Varianten und Vorteile gehen aus den Unteransprüchen hervor.

Demnach wird vorgeschlagen, einen Soll-/Istvergleich zwischen dem Fahrerwunsch und der aktuellen Motordrehzahl durchzuführen und mittels eines Drehzahlreglers die Sollmotordrehzahl im Leerlauf vollautomatisch um genau jenen Wert zu erhöhen, der dem Drehzahlabfall bei Teil- oder Volllastbetrieb entspricht. Zu diesem Zweck wird zwischen der Motorsteuerung und der Einrichtung, die der Motorsteuerung den Fahrerwunsch übermittelt, ein Drehzahlregler geschaltet, welcher einen Drehzahlabfall unterdrückt.

Vorzugsweise ist der Drehzahlregler als Proportional-Integralregler (PI-Regler) ausgebildet; das Verfahren wird in den Fahrregler integriert.

Die Erfindung wird im folgenden anhand der beigefügtren Figur, welche die Struktur der Fahrzeugsteuerung gemäß der Erfindung schematisch darstellt, beispielhaft näher erläutert.

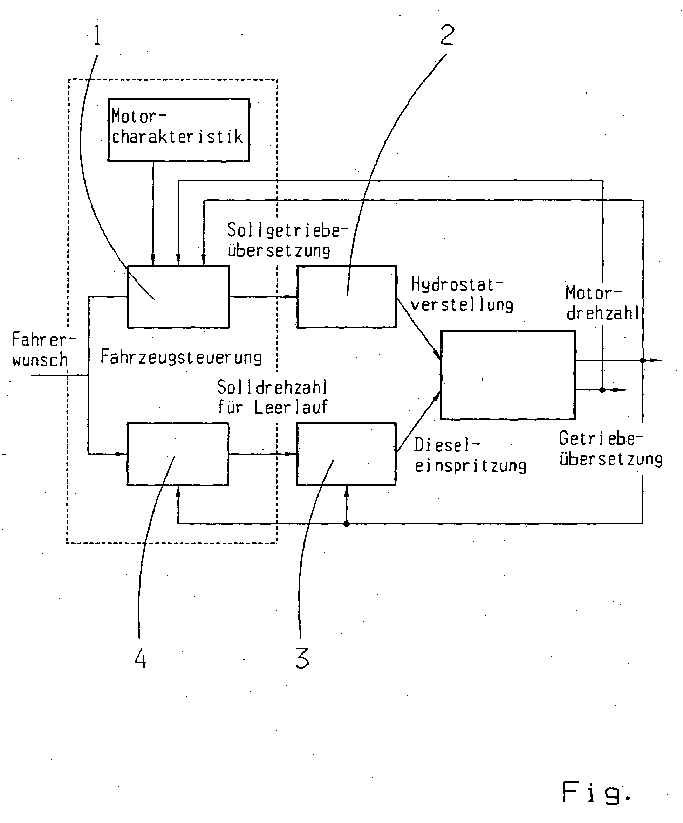

Wie aus der Figur ersichtlich, umfasst die Fahrzeugsteuerung für einen Traktor mit einem Stufenlosgetriebe einen Drückungsregler 1, welcher die Getriebeübersetzung zum Zweck der Begrenzung des Drehzahlabfalls beim Übergang Teillast-Volllast regelt. Eingangsdaten für den Drückungsregler 1 sind Fahrerwunsch, Motorcharakteristik, Ist-Motordrehzahl und Ist-Getriebeübersetzung; der Ausgang des Drückungsreglers 1 ist mit der Getriebesteuerung 2 verbunden, welche die Hydrostatverstellung steuert. Der Fahrerwunsch dient neben der Ist-Motordrehzahl auch als Eingangssignal für die Motorsteuerung 3.

Gemäß der Erfindung wird ein Betrieb mit konstanter Motordrehzahl bei Teil- und Volllastbetrieb dadurch ermöglicht, dass zwischen einer Einrichtung, welche den Fahrerwunsch an die Motorsteuerung 3 übermittelt und der Motorsteuerung 3 ein Drehzahlregler 4 geschaltet, welcher einen Drehzahlabfall bei Teil- oder Volllastbetrieb unterdrückt. Erfindungsgemäß wird die Drehzahl im Leerlauf um den Wert erhöht, der dem Drehzahlabfall bei Teil- oder Volllastbetrieb entspricht.

Das hier vorgestellte Verfahren ist kostengünstig implementierbar, da die vorhandenen Fahrzeugsteuerungen um eine Komponente, nämlich den Drehzahlregler 4 erweitert werden. Zudem ermöglicht es einen komfortablen PTO-Betrieb.

### Bezugszeichen

- 1: Drückungsregler
- 2: Getriebesteuer
- 3: Motorsteuerung
- 4: Drehzahlregler

## Patentansprüche

1. Verfahren zum Betrieb eines Traktors mit einem Stufenlosgetriebe und einem Motor welcher ohne Last, dem Leerlauf, und mit Last, dem Teil- oder Vollastbetrieb betreibbar ist und bei welchem sich die Motordrehzahl durch Anlegen einer Last verringert, wobei zwischen dem Fahrerwunsch und der aktuellen Motordrehzahl ein Soll-/Istvergleich durchgeführt wird, **dadurch gekennzeichnet, dass** ein Drehzahlabfall dadurch unterdrückt wird, dass automatisch eine dem Fahrerwunsch zugeordnete Sollmotordrehzahl im Leerlauf um den Wert erhöht wird, der dem Drehzahlabfall bei Teil- oder Vollastbetrieb entspricht, wodurch sich ein Betrieb mit konstanter Motordrehzahl ergibt.

2. Verfahren nach Anspruch 1, **dadurch gekennzeichnet, dass** es in den Fahrregler des Traktors integriert ist.

3. Steuerung zum Betrieb eines Traktors mit einem Stufenlosgetriebe, insbesondere zur Durchführung des Verfahrens nach Anspruch 1, oder 2 umfassend einen Drückungsregler (1), eine Getriebesteuerung (2) und/oder eine Motorsteuerung (3) **dadurch gekennzeichnet, dass** ein Drehzahlregler (4) vorgesehen ist, welcher zwischen der Motorsteuerung (3) und einer Einrichtung, die an die Motorsteuerung (3) den Fahrerwunsch übermittelt, geschaltet ist, wobei der Drehzahlregler automatisch eine dem Fahrerwunsch zugeordnete Sollmotordrehzahl im Leerlauf um den Wert erhöht, der dem Drehzahlabfall bei Teil- oder Vollastbetrieb entspricht, wodurch sich ein Betrieb mit konstanter Motordrehzahl ergibt.

4. Steuerung nach Anspruch 3, **dadurch gekennzeichnet, dass** der Drehzahlregler (4) ein Proportional-Integralregler (PI-Regler) ist.

## Claims

1. The invention relates to a method for the operation of a tractor with a CVT and an engine, which can be operated without load, in the idle mode, and with load, in the part-load or full-load mode, and in which load application reduces the engine speed, with a comparison of actual and setpoint values being performed between the driver's request and the actual engine speed, **characterized in that** a speed drop is suppressed due to the fact that a desired engine speed in the idle mode assigned to the driver's request is automatically increased by the value which corresponds to the speed drop during partial or full-load operation, as a result of which operation at a constant engine speed is achieved.

2. A method according to claim 1, **characterized in that** it is integrated into the control unit of the tractor.

3. A control system for the operation of a tractor with a CVT, especially for the realization of the method according to claim 1 or 2, with a pressure regulator (1), a transmission control (2) and/or an engine control (3) being included, **characterized in that** a speed controller (4) is provided, which is interposed between the engine control (3) and a device which transmits the driver's request to the engine control (3), with the speed controller (4) automatically increasing a desired engine speed in the idle mode assigned to the driver's request by the value which corresponds to the speed drop during partial or full-load operation; as a result of which operation at a constant engine speed is achieved.

4. A control system according to claim 3, **characterized in that** the speed controller (4) is a PI controller.

## Revendications

1. Procédé pour faire fonctionner un tracteur équipé d'une transmission à variation continue et d'un moteur qu'on peut faire travailler sans charge, en marche à vide, et sous charge, à charge partielle ou à pleine charge, et dans lequel la vitesse de rotation du moteur décroît sous l'effet de l'application d'une charge, dans lequel il se produit une comparaison consigne/réelle entre le souhait du conducteur et la, vitesse de rotation actuelle du moteur, **caractérisé en ce qu'**une chute de la vitesse de rotation est supprimée, **en ce qu'**en marche à vide, une vitesse de rotation de consigne du moteur qui correspond au souhait du conducteur est automatiquement augmentée de la valeur qui correspond à la chute de la vitesse de rotation dans le fonctionnement sous charge partielle ou à pleine charge, de sorte qu'on obtient un fonctionnement avec vitesse de rotation du moteur constante.

2. Procédé selon la revendication 1, **caractérisé en ce qu**'il est intégré dans le régulateur de marche du tracteur.

3. Commande pour le fonctionnement d'un tracteur équipé d'une transmission à variation continue, en particulier pour la mise en oeuvre du procédé selon la revendication 1 ou 2, comprenant un régulateur de pression (1), une commande de transmission (2) et/ou une commande de moteur (3), **caractérisée en ce qu**'il est prévu un régulateur de vitesse de rotation (4) qui commute entre la commande du moteur (3) et un dispositif qui transmet le souhait du conducteur à la commande du moteur (3), en marche à vide, le régulateur de vitesse de rotation augmentant automatiquement une vitesse de rotation de consigne du moteur qui correspond au souhait du conducteur, de la valeur qui correspond à la chute de vitesse de rotation dans le fonctionnement à charge partielle ou à pleine charge, de sorte qu'on obtient un fonctionnement avec vitesse de rotation du moteur constante.

4. Commande selon la revendication 3, **caractérisée en ce que** le régulateur de vitesse de rotation (4) est un régulateur proportionnel-intégral (régulateur PI).
